# EUROPEAN PATENT SPECIFICATION

(11) **EP 1 834 884 B1**
(45) Date of publication and mention of the grant of the patent: **31.12.2008**
(21) Application number: 05701656.0
(22) Date of filing: 04.01.2005
(51) Int. Cl.: B65D 6/16

(54) **LID-EQUIPPED, MONOMATERIAL CONTAINER FOR HORTICULTURAL USE**
MIT EINEM DECKEL VERSEHENER BEHÄLTER AUS EINEM EINZIGEN MATERIAL ZUR VERWENDUNG IM GARTENBAU
RECIPIENT A MATERIAU UNIQUE EQUIPE D'UN COUVERCLE A UTILISER EN HORTICULTURE

(43) Date of publication of application: 19.09.2007
(73) Proprietor: Boxidea, s.l., 46529 Canet d'en Berenguer (ES)
(72) Inventor: RIO GONZÁLEZ, Juan, José, 46529 Canet d'en Berenguer (ES); QUEROL PUIG, Santiago, Antonio, 46529 Canet d`en Berenguer (ES)
(74) Representative: Maldonado Jordan, Julia
(86) International application number: PCT/ES2005/000001
(87) International publication number: WO 2006/075031

(56) References cited:
- EP-A1- 1 225 131
- WO-A1-20/04080829
- GB-A- 2 323 588
- GB-A- 2 342 089
- US-A- 4 173 287
- US-A- 4 867 327
- US-A1- 2004 129 699

## Description

### OBJECT OF THE INVENTION

This invention covers a box of the type used in marketing fruit and vegetable produce, specifically a box made of medium or high density wood fibre, incorporating holes to facilitate aeration of the product that it contains.

The purpose of the invention is to provide a package able to withstand heavy loads, made of a single recyclable material, which can be transported dismantled and is easy to assemble, with no need for staples, nails or any kind of adhesive, facilitating its stacking and providing optimum ventilation of the products kept inside it.

### BACKGROUND OF THE INVENTION

The usage of cardboard boxes for storing and transporting fruit and vegetable produce is well known. Although these have the advantage of being able to be stored dismantled, taking up the least space possible, such boxes involve the disadvantage of having very low structural rigidity, which is why they cannot be used for storing excessively heavy products, apart from entailing the further problem of a major drop in their structural rigidity in the presence of humidity.

Wooden boxes are also often used for this type of products. Although they have greater structural rigidity, to be assembled they require staples, nails or some kind of adhesive complicating the construction process, which results in making the final product more expensive.

This type of boxes also has the added problem of being difficult to recycle, due to the presence of said staples or nails, whose elimination in the recycling process becomes complicated, to such an extent that there are countries which do not allow in boxes with staples.

Apart from this, in a large number of countries the use of wooden boxes is covered by certain legislation forcing said wood to be treated to be free of pests, with the corresponding certificate vouching for this, though this is not always complied with.

This type of boxes involves the further problem of being supplied assembled, consequently using up the space available, with the economic repercussions that this has.

Lastly, cardboard and wooden boxes are also known of with holes, slits or slots in their sides to improve their preservation condition by aeration. This solution is valid for vertically stacking boxes, but when space reasons mean that several piles of boxes are stacked beside each other, forming several rows, the boxes located on the outside make it impossible to air the other boxes, as they cover these completely, with the resulting damage for the products stored.

US 2004 129 699 A1 discloses a bulk box of plastic material including slots, hooks and flanges.

GB-A-2 342 089 discloses a structure for storing goods made of pieces with tongues and slots, made of resilient plastics material.

### DESCRIPTION OF THE INVENTION

The single-material package for containing fruit and vegetable produce with a lid as proposed in this invention is intended to provide an entirely satisfactory solution to the problems stated above, being made up of six pieces of "MDF" medium or high density wood fibre. These pieces consist of a bottom, two sidepieces, two ends and a top or lid. All these pieces can be easily fitted together with no need for nails, staples nor any kind of adhesive.

The bottom consists of a basically rectangular piece with chamfered corners, a plurality of holes of different radiuses, evenly distributed across its surface, as well as a series of slots longitudinally spread along its smaller sides, with a plurality of trapezium-shaped tabs emerging from its larger edges to assemble the side pieces to said bottom easily.

The side pieces consist of a basically rectangular body, with a broad notch in its upper side, to facilitate aeration of the contents of the box, with chamfered lower edges, and a plurality of slots at both side and bottom edges positionally coinciding with the tabs emerging from the larger edges of the bottom, in the case of the lower edge, and with the tabs emerging from the box ends, as will be described below.

The box end pieces consist of a basically rectangular body, with chamfered lower edges, incorporating in their lower edge a plurality of trapezium-shaped tabs, of the same kind as the ones emerging from the longer sides of the bottom. In their side edges there are a number of trapezium-shaped tabs, in whose lower edge there is a small notch which thus forms a tooth for tongue and groove-type coupling with the side pieces by sliding in under pressure, with said side edge having a wedge that makes it impossible to pull out the box end after being coupled to the slot. They also have the usual oval-shaped holes in the middle upper side like handles, having a small extension or tab in the middle of the upper edge, for coupling the top.

This top, with a basically rectangular shape, and coinciding with the mouth of the box, has a number of holes, for proper aeration of the product inside, as well as to help viewing the contents, having two appendices for coupling to the aforementioned oval holes in the box ends in the middle zone of its shorter sides, so that after being attached, this top can also be used as a handle for the box, by means of its holes.

Both the box sides and the ends have triangular-shaped extensions or appendices on their upper edges. These extensions facilitate perfect vertical stacking of the boxes, when these have not been placed in perfect alignment for some reason, as the rounded lower edges of both the ends and the sides coincide with the sloping edges of these extensions, the upper box sliding on said sloping surface to its proper position by its own weight.

To get greater stability in stacking, the box ends have in turn a number of trapezium-shaped tabs along their upper edges, spaced out in such a way as to constitute a tongue and groove coupling with the tabs of the lower bottom securing edge of the end belonging to the box immediately above.

### DESCRIPTION OF THE DRAWINGS

To complement the description being given herein, in order to ensure better understanding of the characteristics of the invention, according to a preferential example of its practical execution, a set of drawings is included as full part of this description, in which the following items are shown, for illustration purposes and without constituting any limitation, since the scope of the invention is defined by the claims:
Figure 1.- This figure shows an exploded plan view of a box for fruit and vegetable produce, made according to the object of this invention.
Figure 2.- Shows a plan view of the tabs for coupling the base to the sides.
Figure 3.- Shows a perspective view of the box in an intermediate phase of the assembly.
Figure 4.- Shows a perspective view of the assembled box without its lid.
Figure 5.- Shows a perspective view of the assembled box with its lid.
Figure 6.- Shows an elevation view of a detail of the prior assembly of the box ends to the sides.
Figure 7.- Shows an elevation view of a detail of the final arrangement of the assembly tabs in the top area of the box ends to the sides.
Figure 8.- Shows an elevation view of a set of boxes stacked in several rows.
Figure 9.- Shows a plan view of a set of boxes stacked in several rows.

### PREFERENTIAL EXECUTION OF THE INVENTION

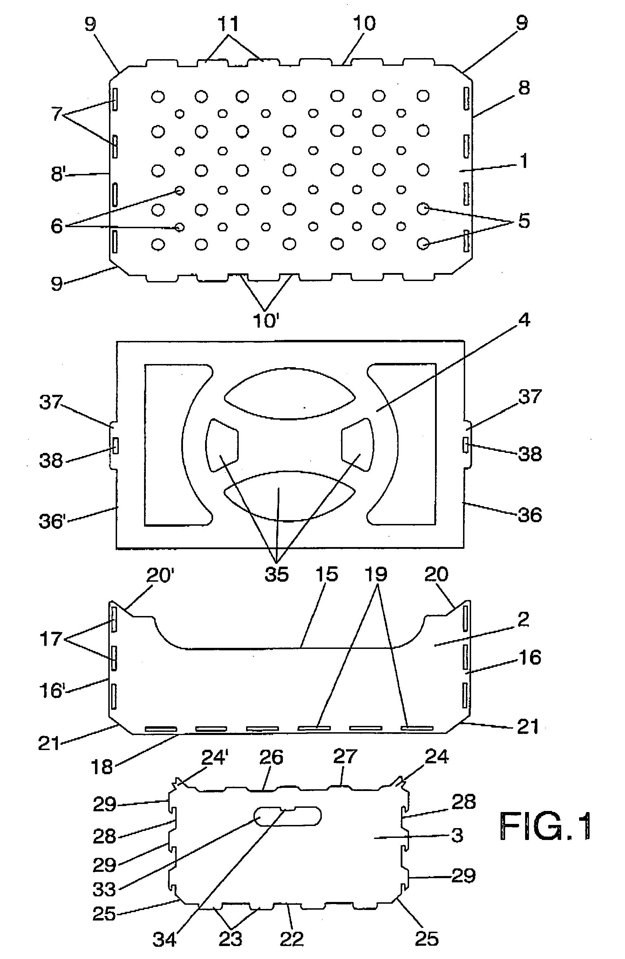

In view of the figures referred to, and particularly Figure 1, it can be seen how the box for fruit and vegetable produce proposed by the invention consists basically of a bottom (1), two sides (2) (2'), two ends (3), (3') and a lid (4), all being able to be coupled together.

The bottom (1) consists of a basically rectangular body, fitted with a plurality of circular holes (5) and (6), of greater and small diameter respectively, spaced out over its surface area, as well as a series of slots, (7) longitudinally distributed along its lower edges (8), (8') for tongue and groove coupling to the ends (3), (3'). The bottom (1) also has four chamfered corners (9) and a plurality of tabs (11) emerge from its larger sides (10), (10') for tongue and groove coupling to the sides (2), (2'), in a coupling arrangement which will be explained below.

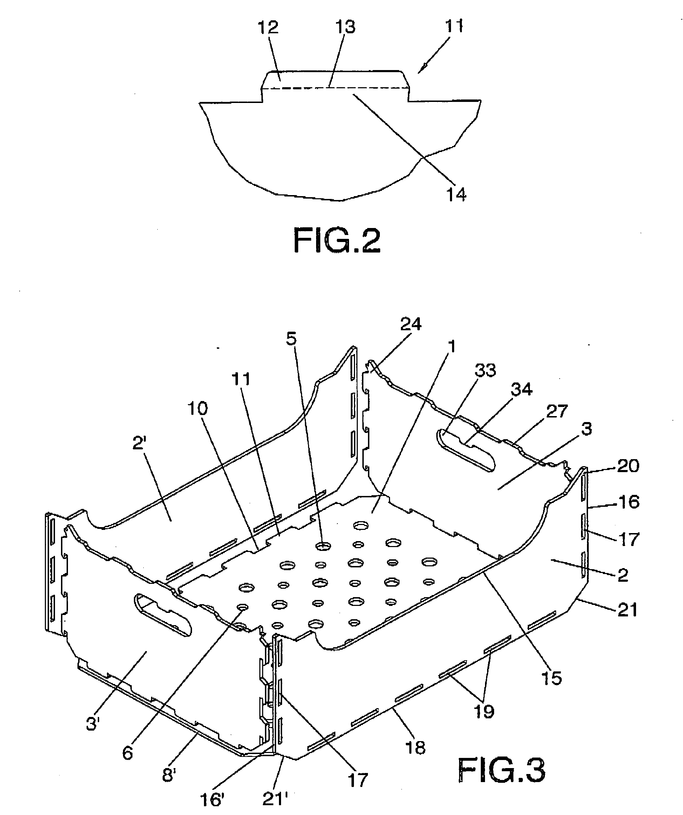

These tabs (11) have a trapezium shape with a chamfered presentation zone (12) with its edges rounded off, this zone helping to position it against the corresponding slot, an expansion zone (13), of slightly greater length than that of said slot and an inverse trapezium-shaped zone (14), with a transversal length equal to the thickness of the part that receives this, having in its narrowest longitudinal zone the same longitudinal coordinate as the receiving slot, as can be seen in Figure 2.

The sides (2), (2') consist of a basically rectangular body, with the traditional notch (15) in its upper larger side, this being a rectangular notch, with its edges extremely rounded off to get greater aeration of the product housed inside the box.

On both smaller sides (16), (16') the box sides (2), (2') incorporate a number of slots (17), as well as in their lower edge (18), given reference (19) for its respective assembly with the ends (3), (3') and the bottom (1).

Furthermore, two triangular extensions (20), (20') emerge from the ends of these sides (2), (2'), the extensions' inclination coinciding with the inclination of both chamfered lower corners (21), (21').

The ends (3), (3') have an essentially rectangular body, provided in its lower edge area (22) with a plurality of tabs (23), of the same kind as the ones present in the upper edges (10), (10') of the bottom (1).

From the ends of said box ends (3), (3') there emerge two triangular extensions (24), (24') whose inclination coincides with the inclination of both chamfered lower corners (25), (25'). A self-stacking effect is achieved by means of these and the triangular extensions (20), (20') fitted on the box sides (2), (2'), as well as their chamfered corners (21), (21'), so that if the upper box has not been placed properly, this will slide down under its own weight onto said sloping surfaces until the proper position is reached.

To ensure greater stability of the stacked boxes, the box ends (3), (3') incorporate in turn at their upper edge (26), a number of tabs (27), of trapezium shape, spaced out in such a way that these form a tongue and groove coupling with the surface of the tabs (23) of the box end, which stand out from the lower side of the bottom (1),

At both lateral edges (28), (28') the box ends (3), (3') incorporate a number of trapezimn-shaped tabs (29) in whose lower edge these have a small notch (30), with the same width as the thickness of the sides (2), (2'). This notch (30) generates a tooth (31), for tongue and groove coupling with the box sides (2), (2') through its holes (17).

As can be seen in Figure 3, for assembling the box, the procedure involves placing the sides opposite each other (2), (2') with the larger sides (10), (10') of the bottom (1). Then the box ends (3), (3') are placed on the lower sides (8), (8') of the bottom (1), the four pieces thus being presented, after which the sides (2), (2') are fitted to the bottom (1), inserting the tabs (11) by elastic deformation into the slots (19), and at the same time inserting the tabs (29) of the ends (3), (3') into the slots (17) in the box sides.

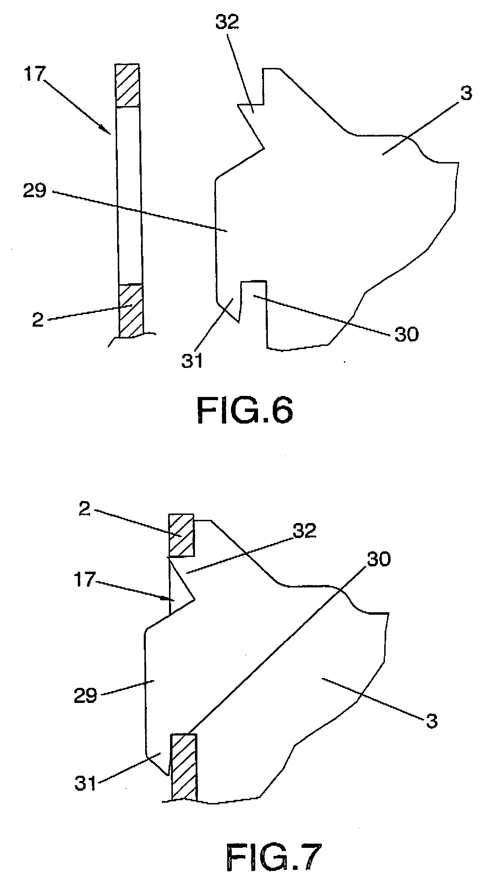

After inserting the tabs (29), these are locked in by means of vertical downward movement, applying a certain pressure on the box end, elastically deforming a small wedge (32), located beside the tab closest to the upper end of the edges (28), (28'), so that after fitting this wedge into the slot (17), this prevents any upward vertical movement of the box end, preventing it from being pulled out, as can be seen in Figures 6 and 7.

The pressure applied as above is made use of to lock the tabs (23) of the lower edge of the box end in the slots (7) present in the smaller edges (8), (8') of the bottom (1) in the same movement, the box ending up properly assembled, except for the top, without the use of any kind of adhesive, staples or nails being necessary for this.

In their upper middle zone the box ends (3), (3') have the traditional oval-shaped hole (33), used as a handle, which has in its upper middle zone a small tab (34) for coupling the lid (4).

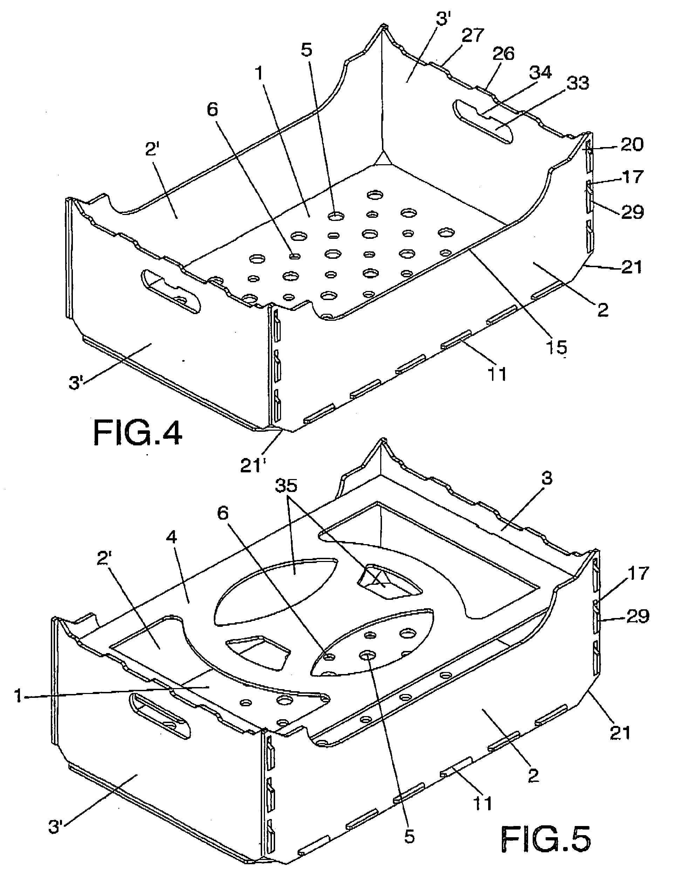

As can be seen in Figures 1 and 5, the lid (4) has a basically rectangular surface, with a number of holes (35) for proper aeration of the product inserted, as well as for facilitating the vision of the contents inside.

In the middle zone of its shorter sides (36), (36') this lid (4) has certain extensions (37), which incorporate slots (38) for coupling this to the box, so that after facing the lid (4) towards the mouth of the box, by means of a small elastic deformation of this, the extensions (37) are inserted through the oval-shaped holes (33) in the box ends (3), (3'), the tab (34) being coupled in the slot (3 8).

This thus means that the lid has the effect of holding back the products contained in the box, if this should tip over, and this lid can be used as a handle by means of the holes (35).

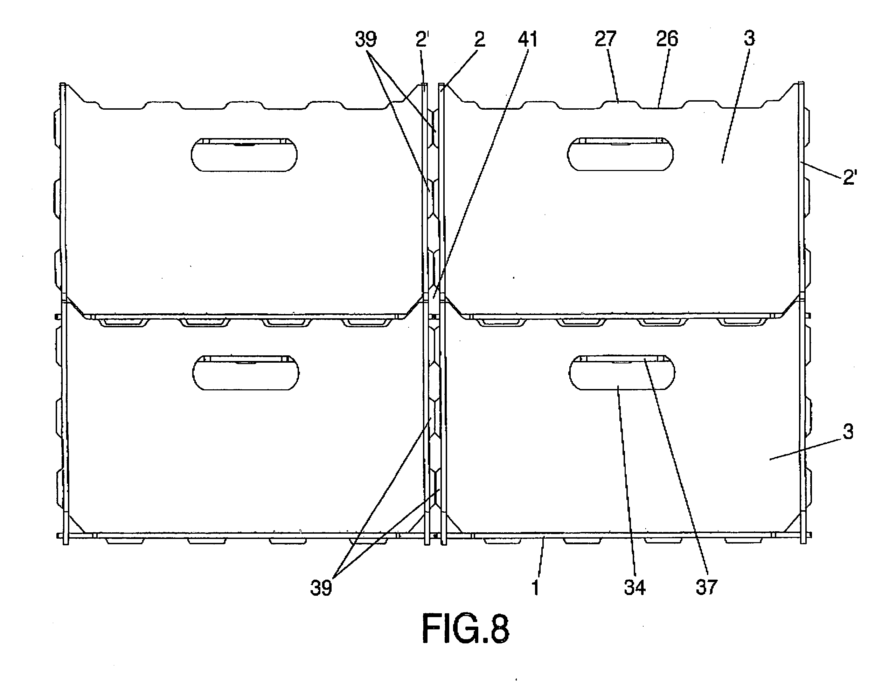

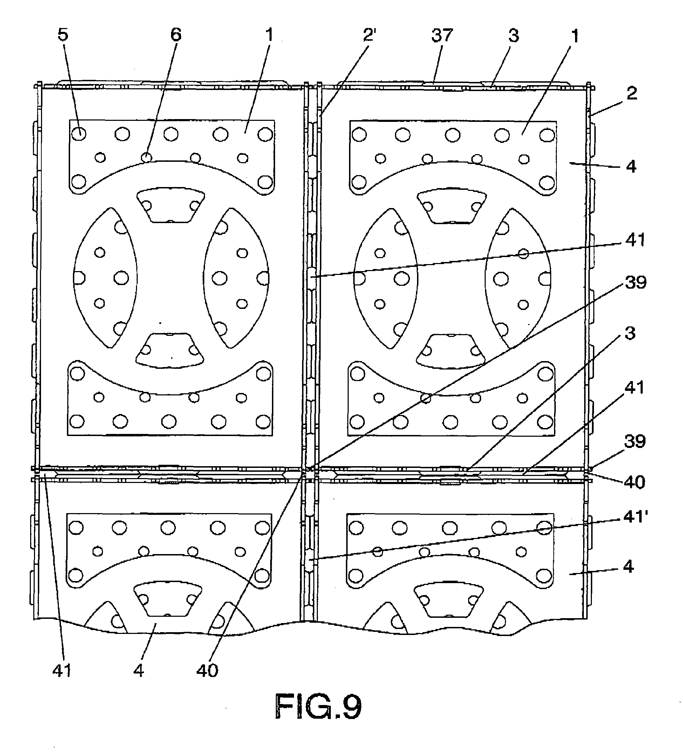

As can be seen in Figures 8 and 9, the projections (39) of the tabs (29) in the box ends, as well as the distance between the slots (17) and the edge of the side pieces (16), (16'), constitute a spacer between boxes, preventing the surfaces of the boxes from coming into contact with each other, when these are placed in a compact pallet arrangement, facilitating the circulation of air between the interior boxes through the holes (41)

## Claims

1. Single-material package for containing fruit and vegetable produce comprising a box with lid of the sort that incorporate holes for aeration and means for stacking, **characterised by** consisting of six pieces of MDF, these pieces consisting of a bottom (1), two side pieces (2,2'), two ends (3,3'), and a lid forming top (4), fitted with securing means by tongue and groove coupling, these means specifically being a plurality of tabs (11) in the bottom piece (1) coupled to respective slots (19) in the two side pieces (2,2') and a plurality of tabs (29) in the two ends (3,3') coupled to respective slots (17) in the two side pieces (2,2'), said top (4) being able to be coupled to the mouth of the box, so that after being coupled it prevents the contents of the box from spilling out if this is turned over.

2. Single-material package for containing fruit and vegetable produce, according to claim 1, **characterised in that** said tabs (29), present in the lateral edges of the ends (3,3') of the box, are in the shape of a trapezium, whose larger base has a length identical to the slot to which this is coupled, with a small notch (30) in its lower edge, with a width according to the thickness of the part to which this is to be coupled, which generates a tooth (31), so that after inserting the tab into the slot, this locks into the side piece by pressing the box end downwards.

3. Single-material package for containing fruit and vegetable produce according to any of the previous claims, **characterised in that** at least one of said tabs (29) in the ends incorporates in its upper edge a wedge (32), which after being coupled to the respective slot (17) by elastic deformation, prevents the end from coming apart.

4. Single-material package for containing fruit and vegetable produce, according to claim 1, **characterised in that** said tabs (11) in the bottom piece have a trapezium shape, with a chamfered and rounded presentation zone (12) which helps to position this against the corresponding slot, an expansion zone (13), slightly longer than said slot, and an inverse trapezium zone (14), with a transversal length equal to the thickness of the part that receives this, with its narrowest zone having the same longitudinal coordinate as the receiving slot.

5. Single-material package for containing fruit and vegetable produce, according to claim 1, **characterised in that** said means for proper stacking are materialised in upward prolongations of the upper ends of the box side pieces (2,2') and of the box ends (3,3'), determining oblique edges (20,20',24,24'), coinciding with notches of the same geometry made in its lower ends (21,21',25,25'), so that the stacked boxes fit together through said oblique edges, with a self-centring effect determined by their own weight.

6. Single-material package for containing fruit and vegetable produce, according to claim 1, **characterised in that** said top (4) is coupled to the box by means of small tabs (37) which come out of the middle zone of its smaller sides, for coupling by means of bending through oval-shaped holes (34) of the ends (3,3'), said top being able to be used as a handle by means of its holes (35).

7. Single-material package for containing fruit and vegetable produce, according to any of the previous claims, **characterised in that** the free outwardly-projecting ends of the securing tabs (29) in the ends (3,3') as well as the distance existing between the slots (17) and the edges (16), (16') of the side pieces, constitute a spacer between boxes, which when these are palletised determine conduits (41) between them, facilitating air circulation between the boxes.

## Patentansprüche

1. Verpackung aus einem einzigen Material zur Aufnahme von Frucht- und Gemüseprodukten, die eine Kiste mit Deckel jener Art umfasst, die Löcher zur Belüftung und Mittel zum Stapeln beinhaltet, **dadurch gekennzeichnet, dass** sie aus sechs MDF-Stücken besteht, wobei diese Stücke aus einem Boden (1), zwei Seitenteilen (2, 2'), zwei Enden (3, 3') und einer Decke (4), die einen Deckel bildet, bestehen, die mit Sicherungsmitteln durch Feder-Nut-Kopplung befestigt sind, wobei diese Mittel insbesondere eine Vielzahl an Lappen (11) im Bodenstück (1) sind, die an entsprechende Schlitze (19) in den beiden Seitenteilen (2, 2') gekoppelt sind, und eine Vielzahl an Lappen (29) an den beiden Enden (3, 3'), die an entsprechende Schlitze (17) an den beiden Seitenteilen (2, 2') gekoppelt sind, wobei die genannte Decke (4) an die Öffnung der Kiste gekoppelt werden kann, so dass sie nach der Kopplung verhindert, dass die Inhalte der Kiste herauslaufen, wenn diese umgedreht wird.

2. Verpackung aus einem einzigen Material zur Aufnahme von Frucht- und Gemüseprodukten nach Anspruch 1, **dadurch gekennzeichnet, dass** die genannten Lappen (29), die an den seitlichen Rändern der Enden (3, 3') der Kiste vorliegen, die Form eines Trapez haben, dessen längere Grundseite eine Länge hat, die identisch ist in Bezug auf den Schlitz, mit dem diese gekoppelt sind, mit einer kleinen Kerbe (30) in ihrer unteren Ecke, mit einer Breite, die der Dicke des Teils entspricht, mit dem sie gekoppelt werden müssen, welche einen Zahn (31) erzeugt, so dass nach dem Einsetzen des Lappens in den Schlitz, dieser in dem Seitenteil durch Nachuntendrücken des Kistenendes einrastet.

3. Verpackung aus einem einzigen Material zur Aufnahme von Frucht- und Gemüseprodukten nach einem der vorherigen Ansprüche, **dadurch gekennzeichnet, dass** zumindest einer der genannten Lappen (29) in den Enden an seiner oberen Rand einen Keil (32) beinhaltet, der, nachdem er mit dem jeweiligen Schlitz (17) durch elastische Verformung gekoppelt wurde, das Ende daran hindert, auseinanderzufallen.

4. Verpackung aus einem einzigen Material zur Aufnahme von Frucht- und Gemüseprodukten nach Anspruch 1, **dadurch gekennzeichnet, dass** die genannten Lappen (11) in dem Bodenstück die Form eines Trapez haben, mit einem abgeschrägten und abgerundeten Präsentationsbereich (12), der hilft, sie gegen den entsprechenden Schlitz zu positionieren, einen Expansionsbereich (13), der geringfügig länger ist als der genannte Schlitz, und einen inversen Trapezbereich (14), mit einer Querhöhe, die der Dicke des Teils entspricht, das diesen aufnimmt, wobei ihr engster Bereich dieselbe längliche Koordinate hat wie der Aufnahmeschlitz.

5. Verpackung aus einem einzigen Material zur Aufnahme von Frucht- und Gemüseprodukten nach Anspruch 1, **dadurch gekennzeichnet, dass** die genannten Mittel zum geeigneten Stapeln in nach oben gerichtete Verlängerungen der oberen Enden der Seitenteile (2, 2') der Kiste und der Kistenenden (3, 3') materialisiert sind, wobei schräge Ränder (20, 20', 24, 24') bestimmt werden, die mit Kerben gleicher Geometrie, die an ihren unteren Enden (21, 21', 25, 25') gemacht wurden, übereinstimmen, so dass die gestapelten Kisten durch die genannten schrägen Ränder zusammenpassen, mit einem selbstzentrierendem Effekt, der durch ihr eigenes Gewicht bestimmt wird.

6. Verpackung aus einem einzigen Material zur Aufnahme von Frucht- und Gemüseprodukten nach Anspruch 1, **dadurch gekennzeichnet, dass** die genannte Decke (4) mit der Kiste durch kleine Lappen (37) gekoppelt ist, die aus dem mittleren Bereich seiner kleineren Seiten heraustreten, zur Kopplung durch Biegen durch ovale Löcher (34) der Enden (3, 3'), wobei die genannte Decke als Haltegriff durch seine Löcher (35) verwendet werden kann.

7. Verpackung aus einem einzigen Material zur Aufnahme von Frucht- und Gemüseprodukten nach einem der vorherigen Ansprüche, **dadurch gekennzeichnet, dass** die freien, nach außen ragenden Enden der Sicherungslappen (29) in den Enden (3, 3'), sowie der bestehende Abstand zwischen den Schlitzen (17) und den Rändern der Seitenteile (16), (16') einen Abstandshalter zwischen Kisten darstellen, welche, wenn sie auf Paletten gestapelt sind, Leitungen (41) zwischen ihnen bestimmen, welche die Luftzirkulation zwischen den Kisten erleichtern.

## Revendications

1. Conditionnement en une seule matière pour contenir des fruits et des végétaux, comprenant une boîte avec un couvercle, du type incorporant des trous d'aération et des moyens d'empilement, **caractérisé en ce qu'**il consiste en six pièces de MPD, ces pièces consistant en un fond (1), deux pièces latérales (2, 2'), deux extrémités (3, 3') et un couvercle formant la pièce supérieure (4), ajustés avec des moyens de fixation par un accouplement à rainure et languette, ces moyens étant spécifiquement une pluralité d'onglets (11) dans la pièce de fond (1) accouplées aux rainures respectives (19) dans les deux pièces latérales (2, 2') et une pluralité d'onglets (29) dans les deux extrémités (3, 3') accouplés aux rainures respectives (17) dans les deux pièces latérales (2, 2'), ladite pièce supérieure (4) pouvant être accouplée à l'embouchure de la boîte, de façon à ce qu'après avoir été accouplée, elle évite le renversement du contenu de la boîte si celle-ci est renversée.

2. Conditionnement en une seule matière pour contenir des fruits et des végétaux, selon la revendication 1, **caractérisé en ce que** lesdits onglets (29) présents sur les bords latéraux des extrémités (3, 3') de la boîte, sont sous forme de trapèze, dont la grande base a une longueur identique à la rainure à laquelle elle est accouplée, avec une petite encoche (30) sur son bord inférieur, avec une largeur correspondant à l'épaisseur de la partie à laquelle elle est accouplée, qui génère une dent (31), de manière qu'après l'insertion de l'onglet dans la rainure, celui-ci verrouille la pièce latérale en pressant l'extrémité de la boîte vers le bas.

3. Conditionnement en une seule matière pour contenir des fruits et des végétaux, selon l'une quelconque des revendications antérieures, **caractérisé en ce qu'**au moins un desdits onglets (29) dans les extrémités incorpore sur son bord supérieur une clavette (32) qui après être accouplée à la rainure respective (17) par déformation élastique, évite que l'extrémité se sépare.

4. Conditionnement en une seule matière pour contenir des fruits et des végétaux, selon la revendication 1, **caractérisé en ce que** lesdits onglets (11) sur la pièce de fond ont une forme de trapèze, avec une zone de présentation chanfreinée et arrondie (12) qui aide à son positionnement contre la rainure correspondante, une zone d'expansion (13) légèrement plus grande que ladite rainure, et une zone de trapèze inverse (14), avec une longueur transversale égale à l'épaisseur de la partie qui la reçoit, sa zone la plus étroite ayant la même coordonnée longitudinale que la rainure de réception.

5. Conditionnement en une seule matière pour contenir des fruits et des végétaux, selon la revendication 1, **caractérisé en ce que** lesdits moyens d'empilement approprié sont matérialisés dans des prolongements ascendants des extrémités supérieures des pièces latérales (2, 2') de la boîte et des extrémités (3, 3') de la boîte en déterminant des bords obliques (20, 20', 24, 24'), en coïncidant avec des encoches de même géométrie réalisées dans ses extrémités inférieures (21, 21', 25, 25'), de manière à ce que les boîtes empilées s'ajustent ensemble à travers lesdits bords obliques, avec un effet auto-centrant déterminé par leur propre poids.

6. Conditionnement en une seule matière pour contenir des fruits et des végétaux, selon la revendication 1, **caractérisé en ce que** ladite partie supérieure (4) est accouplée à la boîte au moyen de petits onglets (37) qui sortent de la zone médiane de ses petits côtés, pour s'accoupler au moyen de cintrage à travers des trous (34) de forme ovale des extrémités (3, 3'), ladite partie supérieure pouvant être utilisée comme une poignée au moyen de ses trous (35).

7. Conditionnement en une seule matière pour contenir des fruits et des végétaux, selon l'une quelconque des revendications antérieures, **caractérisé en ce que** les extrémités de projection vers l'extérieur des onglets de fixation (29) sur les extrémités (3, 3') ainsi que la distance existant entre les rainures (17) et les bords (16, 16') des pièces latérales constituent un entretoise entre les boîtes, qui lorsque celles-ci sont palettisées détermine des conduites (41) entre celle-ci, en facilitant la circulation d'air entre les boîtes.
